# EUROPEAN PATENT SPECIFICATION

(11) **EP 1 816 438 B1**
(45) Date of publication and mention of the grant of the patent: **27.06.2012**
(21) Application number: 07001752.0
(22) Date of filing: 26.01.2007
(51) Int. Cl.: G01C 21/36

(54) **Method and apparatus for searching point of interest by name or phone number**
Verfahren und Vorrichtung zur Suche nach Punkten von Interesse nach Namen oder Telefonnummer
Procédé et appareil pour chercher un point d'intérêt par nom ou par numéro de téléphone

(30) Priority: 04.02.2006 US 347591
(43) Date of publication of application: 08.08.2007
(73) Proprietor: Alpine Electronics, Inc., Tokyo (JP)
(72) Inventor: Yokata, Tatsuo Alpine Electronics Research Of, Torrance California 90501-1162 (US); Pascual, Joey Alpine Electronics Research Of, Torrance California 90501-1162 (US)
(74) Representative: Klunker . Schmitt-Nilson . Hirsch

(56) References cited:
- EP-A- 1 408 303
- US-A1- 2004 138 810
- US-A1- 2004 260 464

## Description

### FIELD OF THE INVENTION

This invention relates to a method and apparatus for searching a point of interest, and more particularly, to a method and apparatus for use with an electronic device having a global positioning capability such as a navigation system, cellular phone, PDA, etc., for searching a point of interest by inputting either a name or a phone number in the same field of the monitor screen.

### BACKGROUND OF THE INVENTION

Although the present invention is not limited to a particular electronic device, the description regarding the conventional technology and the present invention will be made mainly for the case of a navigation system for an illustration purpose. A navigation system performs travel guidance for enabling a user to easily and quickly reach the selected destination. Such a navigation system detects the current position of the user, reads out map data pertaining to an area at the current user position from a data storage medium. When a destination is set, the navigation system starts a route guidance function for setting a guided route from a start point to the destination.

EP 1 408 303 Al discloses a vehicle navigation system comprising a presentation unit presenting navigational content ; a manual input unit accepting a plurality of input operations ; a voice input unit accepting vocally, input operations of substantially the same contents as those of the manual input unit ; a database storing data necessary for navigation ; and a controller searching the database based on the input operations of the manual input unit or the voice input unit for presenting navigational content on the presentation unit, wherein the controller switches an active status between the manual input unit and the voice input unit based on a usage status of the navigation system, continues predetermined input operations for navigation until a final step is reached, and presents the navigational content.

During the route guidance, the navigation system reads nodes link data from the data storage medium and successively stores the nodes link data of road segments constituting the guided route in a memory. In the actual traveling, the node series is searched for a portion of the guided route displayed on a monitor screen, and the portion of the guided route is highlighted so as to be easily distinguishable from other routes. When the vehicle is within a predetermined distance of a guiding intersection it is approaching, a highlighted intersection diagram with an arrow indicating the direction to turn is displayed to inform the user of the appropriate road and direction.

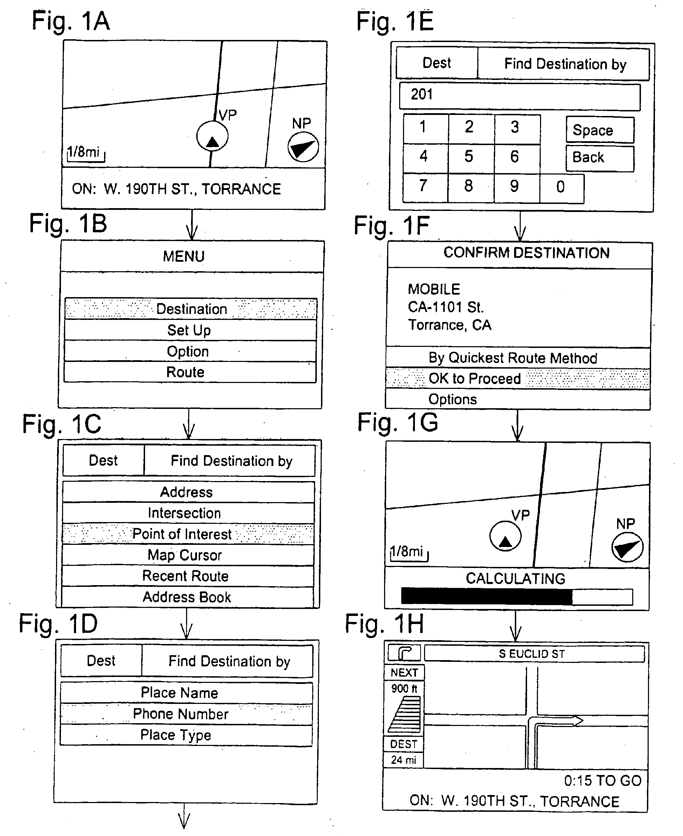

Figures 1A-1G show an example of overall procedure and display examples involved in the navigation system. Figure 1A shows an example of locator map screen of the navigation system when the destination is not specified. Typically, the navigation system displays a street on which a vehicle position VP is shown on a map image. A name of the street and other information such as a north pointer NP, a map scale and a current time may also be illustrated on the monitor screen.

Figures 1B-1F show an example of process for specifying a destination in the navigation system. When selecting a "Destination" menu on a main menu screen of Figure 1B, the navigation system displays an "Find Destination By" screen as shown in Figure 1C for specifying an input method for selecting the destination. The "Find Destination By" screen lists various methods for selecting the destination, which includes "Point of Interest" (POI) for selecting the programmed destination based on the name, category or telephone number.

When selecting the "Point of Interest" method in Figure 1C, the navigation system displays selection methods of point of interest (POI) either by "Place Name", "Place type" or "Phone Number" in Figure 1D. The "Place Name" is to specify a name of POI, the "Place Type" is to specify a category of POI, and the "Phone Number" is to specify a phone number of POI. If the "Phone Number" is selected in Figure 1D, the navigation system shows a keypad to enter a phone number such as shown in Figure 1E. Although not shown in Figure 1E, when the user selects "Place Name", an alpha-numeric keypad is shown that accepts a name of POI.

Suppose the user enters "201", the navigation system retrieves the POIs that match the user's input. As soon as the user enters sufficient information required for finding the desired POI, the navigation system will find matching entries. Figure 1F shows a "Confirm Destination" screen for confirming the destination. If the POI's name displayed is the correct destination, the user enters an "OK to Proceed" key to proceed to the next procedure. In Figure 1G, the navigation system calculates and determines a route to the destination, i.e., the selected POI. The navigation system determines a route to the destination based on, for example, the shortest way to reach the destination, etc.

After determining the guided route, the navigation system starts the route guidance as shown in Figure 1H to guide the user along the calculated route to the destination. Typically, as noted above, the navigation system shows the intersection which is highlighted to show the next turn and a direction of the turn. Such route guidance by the navigation system is also accompanied by voice instructions.

The foregoing is a typical example of using the "Point of Interest (POI)" input method of the navigation system. In the example described above, the user has the choice among a phone number, a place name, and a place type in searching a POI entry as shown in Figure 1D. Namely, the user has to conduct separate steps to select either a place name, a phone number or a place type.

Moreover, when the user had intended to enter a POI name but could not be sure of its exact POI name and the navigation system failed to find the POI, the user may wish to enter a phone number of the POI if it is available. In such a case, the user has to go back to the previous screen to select the search by phone number screen. Thus, there is a need in a navigation system or other electronic devices for searching POIs that can flexibly search a desired POI while minimizing the steps that have to take by the user.

### SUMMARY OF THE INVENTION

It is, therefore, an object of the present invention to provide a method and apparatus for searching a point of interest which allows a user to input either a name or a phone number in the same field of a monitor screen.

The invention provides an apparatus according to claim 1 and a method according to claim 11, for searching a point of interest.

One aspect of the present invention is a method for searching a point of interest (POI). The method includes the steps of: displaying a screen for searching a POI, the screen including an input field arranged for accepting a user's input of characters both by a name of POI and by a phone number of POI; comparing the characters provided to the input field by the user with information in a POI database having a POI name table and a POI phone number table; retrieving POI names or POI phone numbers from the corresponding tables that match the characters specified by the user in the input field ; and displaying a list of the retrieved POI names or POI phone numbers in a predetermined order.

Preferably, the method further includes a step of repeating the above noted steps of comparing the characters with the information in the POI database, retrieving POI names or POI phone numbers, and displaying a list of the retrieved POI names or POI phone numbers, every time when an additional character is provided to the input field. Preferably, the method further includes the steps of interpreting the characters in the input field and determining whether the input characters by the user are intended as a POI name or a POI phone number and discontinuing the search for either the POI name or the POI phone number that is determined not intended by the user.

Preferably, the step of displaying the screen for searching a POI includes a step of providing means for specifying a city name as a search area or deleting the city name from the search area, a step of providing means for browsing categories of POIs in the POI database and selecting a category of POI to search a POI within the selected category, and a step of providing means for selecting an alpha-numeric keypad, a dedicated alphabetic keypad, or a dedicated numeric keypad for entering the characters in the input field.

Another aspect of the present invention is an apparatus for searching a POI which allows a user to input both a POI name and a POI phone number in the same field of a monitor screen. It is unnecessary for the user to input a POI name or a POI phone number in separate fields on the monitor, thereby facilitating a procedure for entering the information for searching the POI. The POI search apparatus is configured to implement the steps defined in the method noted above.

According to the present invention, the method and apparatus for searching a POI under the present invention is able to search a desired POI by a name or a phone number of the POI without the need to input the information in separate fields on the monitor screen. The method and apparatus of the present invention automatically determines whether the input data is valid for a POI name or a POI phone number or both, and immediately searches the matching entries. As a result, the method and apparatus in the present invention can eliminate the steps necessary to choose between the phone number search and the POI name search, thereby saving the time and trouble in operating the navigation system or other electronic devices.

### BRIEF DESCRIPTION OF THE DRAWINGS

Figures 1A-1H are schematic diagrams showing an example operational process and displays on a monitor screen of a navigation system for selecting a point of interest (POI) as a destination and guiding the user to the destination.

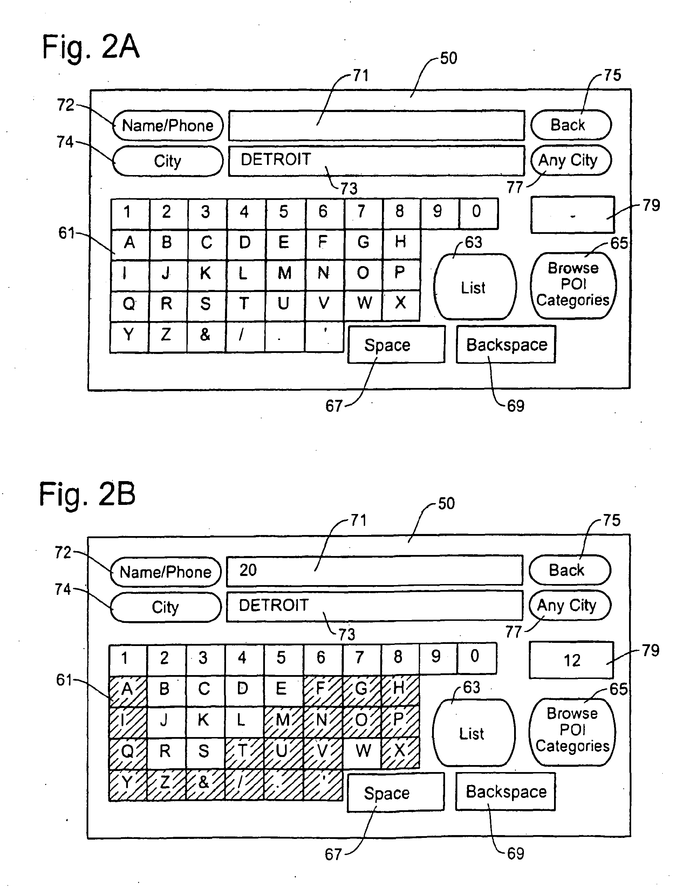

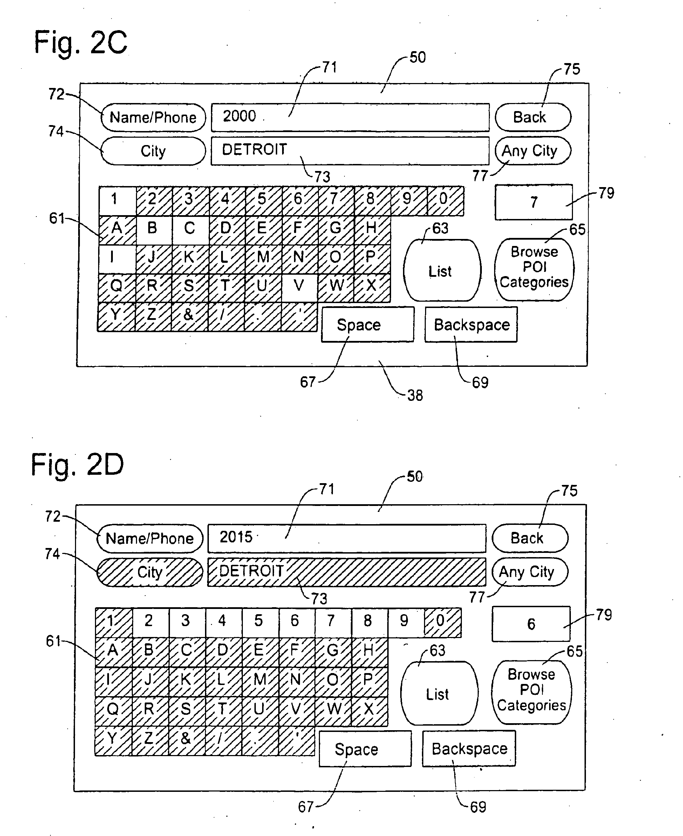

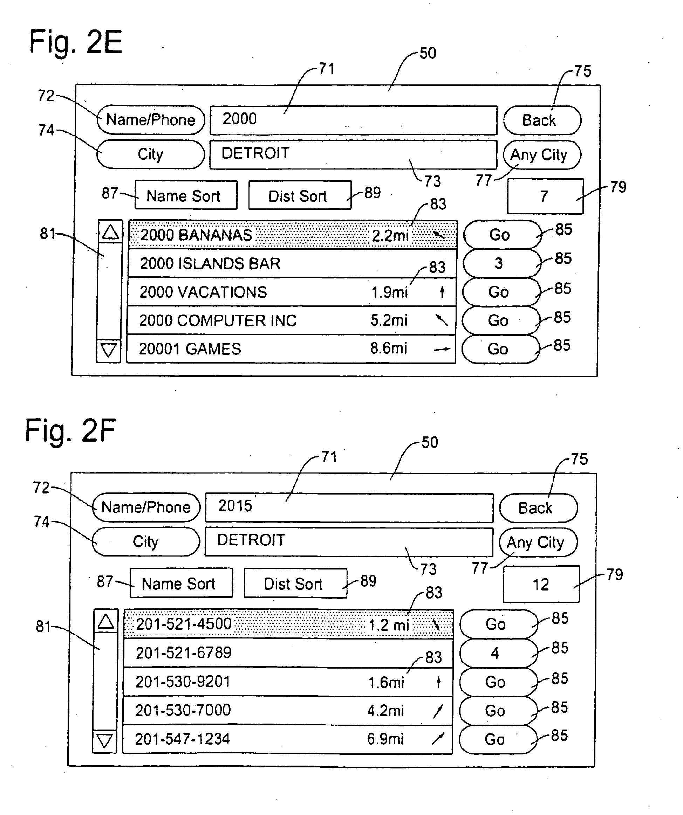

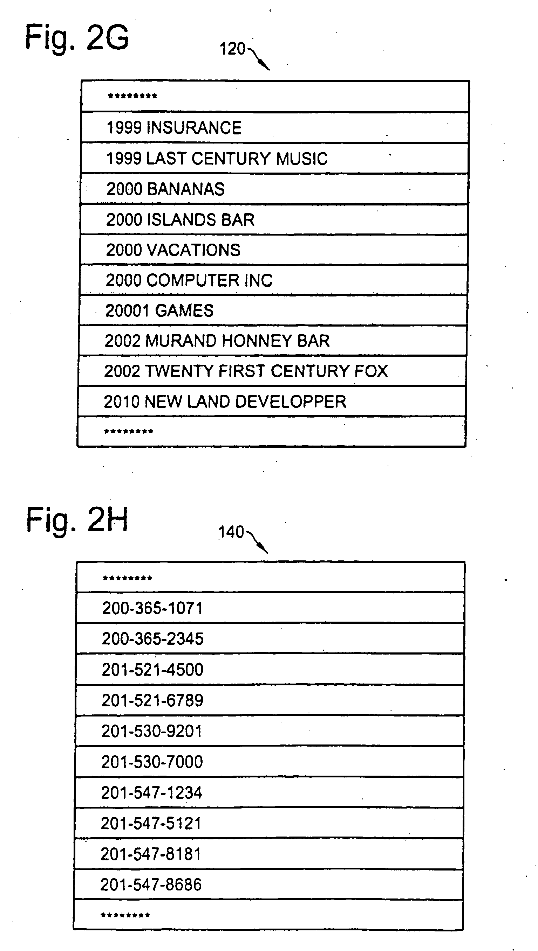

Figures 2A-2F are schematic diagrams showing display examples in the operation of the method and apparatus of the present invention for searching a POI where no character is input in a name/phone field in Figure 2A, the user has input "20" in Figure 2B, the user has input "2000" in Figure 2C, and the user has input "2015" in Figure 2D. Figure 2E is a display example listing POI entries resulted from the step of Figure 2C, and Figure 2F is a display example listing POI entries obtained from the step of Figure 2D. Figure 2G shows an example of a part of POI name table and Figure 2H shows an example of a part of POI phone number table.
Figures 3A-3D are display examples showing alterative methods of listing POI entries where the input characters match both POI names and phone numbers, where POI names are prioritized in Figure 3A, both POI names and phone numbers are mixed in Figure 3B, phone numbers are converted to POI names so that only the POI names are listed in Figure 3C, and POI names are converted to phone numbers so that only the phone numbers are listed in Figure 3D.
Figures 4A and 4B are display examples each having an alterative input keypad for entering information for searching a POI where Figure 4A shows a dedicated alphabetic keypad and Figure 4B shows a dedicated numeric keypad.
Figure 5 is a flow chart showing a basic operational process for searching a desired POI in accordance with the present invention.
Figure 6 is a block diagram showing an example of structure of a vehicle navigation system implementing the present invention for searching POIs entries through name/phone number search.
Figure 7 is a functional block diagram showing a basic structure of the apparatus of the present invention for searching a desired POI through the name/phone number search.

### DETAILED DESCRIPTION OF THE INVENTION

The present invention will be described in detail with reference to the accompanying drawings. The method and apparatus for searching a point of interest (POI) by name or phone number under the present invention may be implemented in various types of electronic device including, but not limited to, a vehicle navigation system, a portable navigation device, a personal computer, a notebook computer, a personal digital assistant (PDA), a cellular phone, etc. However, for convenience of illustration, the present invention is described in the following for the case where it is implemented in a navigation system.

Figures 2A to 2F show display examples of a navigation system implementing the method and apparatus of the present invention for searching a point of interest (POI) by a name or a phone number. Figure 2G shows an example of a part of a POI name table 120 and Figure 2H shows an example of a part of a POI phone number table 140 for use in the POI search method and apparatus of the present invention. Basically, in the present invention, the user can input a name or a phone number of a POI in the same input field, i.e., rather than two separate fields, of a monitor screen as described in detail below.

In response, the method and apparatus of the present invention searches POIs in a POI database as soon as one or more valid characters are input by the user. The method and apparatus of the present invention automatically determines whether the input characters are for a POI name or a POI phone number of both. Typically, the POI database includes a POI name table 120 and a POI phone number table 140 as shown in Figures 2G and 2H. For example, the POI name table 120 is configured for each area such as a city or a certain distance range from a current user position while the phone number table 140 covers the entire country.

The examples of Figures 2A-2F illustrate such a process of inputting a POI name or a POI phone number and retrieving matching entries to find a desired POI. Referring to Figure 2A, a monitor screen 50 has a name/phone input field 71, a name/phone indicator 72, a city field 73, a city indicator 74, a back button 75, an any-city button 77, an alpha-numeric keypad 61, a space button 67, a backspace button 69, a list button 63, a browse POI categories button 65, and a matching entry number indicator 79.

The name/phone input field 71 is an area into which the user can enter either a name or a phone number of the desired POI. Because the name/phone field 71 accepts both a name and a phone number, thus, it is not necessary for the user to enter a POI name or a POI phone number separately into different fields of the monitor screen 50. The city field 73 accepts the name of a city, which will be used to filter the POI data to find the desired POI.

The browse POI categories button 65 allows the user to browse the data of POI types stored in the POI database (map storage medium) of the navigation system. Typically, the POI category data is configured by a layered structure so that the user can search POI types from a higher level such as "Restaurant" to a lower level such as "Chinese Restaurant", "Mexican Restaurant", etc. When the user finds a specific type of POI through the use of the browse POI categories button 65 and selects the specific type of POI, the name/phone search by the navigation system will be limited to the specified POI type.

The city field 73 is to specify a city name within which to find a desired POI. The city field 73 is not a mandatory field and may be left blank. In such a case, the navigation system will find matching entries for POI names or phone numbers located within a predetermined distance range, such as 30 miles, from a particular location, typically, a current user location. The any-city button 77 is used to clear the particular entry of the city field to find relevant entries in any cities.

The matching entry number indicator 79 shows a number of entries that satisfied the condition entered by the user. In the example of Figure 2A, the matching entry number indicator 79 is blank because the number of matching entries is too numerous or not yet determined. However, as the user enters more text as shown in the following drawings, the matching entry number indicator 79 begins to show the number of matching entries. For instance, if a city name in the city field 73 is Detroit, and the characters in the name/phone input field 71 is "20", and if the number indicated in the matching entry number indicator 79 is 30, then the number signifies that there are 30 entries that have either the phone number or POI name starting with "20" in Detroit.

The back button 75 is used to switch back to the previous screen. The list button 63 is used to list the matching POI entries on the monitor screen 50. If the user presses the list button 63, the navigation system displays a list of POI entries in a predetermined order as long as the data in the name/phone input field 71 is valid. The backspace button 69 is used to move a cursor backward in the name/phone input field 71 or the city field 73. The space button 67 inserts a space in the characters in the name/phone input field 71 or the city field 73.

In the example of Figure 2A, the name/phone input field 71 includes no input data, while the city field 73 includes a city name of Detroit. When a POI category is already specified with use of the browse POI categories button 65, an overall number of POIs in the city within such a POI category may be too large. Thus, the matching entry number indicator 79 does not show any number. Alternatively, if a POI category is not specified, the matching entry number indicator 79 does not show a number since no information is provided to conduct the search.

Figure 2B is a display example similar to that of Figure 2A except that the user has entered numerals "20" in the name/phone input field 71. In this condition, the navigation system has found entries in both the POI name entries and the phone number entries. The number of matching entries as indicated in the matching entry number indicator 79 is "12". The user may press the list button 63 to see a list of all of the relevant entries.

In the step of Figure 2B, as long as the user's input data is valid in both the POI name table 120 and the phone number table 140, the system will check both the POI name table 120 and the phone number table 140 in the POI database. As soon as the user inputs one or more characters into the name/phone input field 71, the system dynamically checks matching data by searching the databases. Some keys of the alpha-numeric keypad 61 are disabled since the navigation system has determined that those keys cannot follow the string that has been entered in order to help the user in pressing right keys.

Figure 2C shows a display example where the user has further entered characters up to "2000". In this situation, the navigation system can determine that there is no phone number that starts with 2000 and thus only POI name entries are relevant to the input data in the name/phone input field 71. Thus, the navigation system searches for POI names that start with "2000" in the POI name table 120 and discontinues the search in the POI phone number table 140.

When the number of relevant entries are less than a certain predetermined number, the monitor screen 50 will automatically shows an entry list 83 of the POI entries as shown in Figure 2E. The entry list 83 shown in Figure 2E may also appear by pressing the list button 63 without regard to whether the number of POI entries are smaller or greater than the predetermined number. The POI entries in the entry list 83 is the search result that shows the POI names that start with the characters "2000" in response to the input data "2000" by the user in the name/phone input field 71 in Figure 2B.

In the example of Figure 2E, the POI names in the entry list 83 are displayed in an alphabetical order rather than a numerical order. It is also possible to list the POI names in the entry list 83 based on the order of distance from a particular position such as a current user position. The total number of relevant entries is 7 as indicated in the matching entry number indicator 79. In the display shown in Figure 2E, five POI names are listed. A scroll bar 81 can be used to scroll the display screen to see the other entries in the entry list 83.

Next to each entry is a selection button 85, which is used to select a particular entry from the entry list 83 to see more information such as an address, or to select the POI as a destination. In this example, the selection button 85 with the indication "Go" will allow the user to select the associated POI as a destination. Then the navigation system shows the destination confirmation screen such as shown in Figure 1F and starts the route guidance operation as shown in Figure 1H.

If the indication on the button 85 is a number, it shows that a plurality of identical entries exist in the selected city. For example, a number "3" is shown on the selection button 85 for the entry "2000 ISLANDS BAR" in Figure 2E. This means that the POI name "2000 ISLANDS BAR" may be a part of franchise stores with multiple business locations within the city. When the selection button 85 showing the number is pressed, the navigation system will list the address of each "2000 ISLANDS BAR" so that the user can choose a desired entry.

In Figure 2E, the monitor screen 50 includes a name sort button 87 and a distance sort button 89. The name sort button 87 is used to sort the POI entries in an alphabetical order. The distance sort button 89 is used to sort the POI entries in an order of distance from a predetermined position, typically, a current user position. As another example, the distance may be calculated from a position specified by the user or a city center when a city name is specified in the city field 73.

Figure 2D shows a display example where the user has input the characters "2015" in the name/phone input field 71 on the monitor screen 50. In this condition, the navigation system determines that there is no POI name that starts with 2015 and that the user's input should be a phone number. The city indicator 74 and the any-city button 77 are dimmed to show that they have been disabled because filtering based on a city name is moot since the phone numbers can specify the area in which the POIs are located. Therefore, as soon as the user's input data is determined to be only a phone number, the navigation system may disable the city field 73 and the any-city button 77. Further, the characters in the name/phone input field 71 may be automatically formatted with separators to improve readability. For example, the input data in the name/phone input field 71 reads "201-5" rather than "2015".

Figure 2F shows a display example where the navigation system lists the relevant POI entries retrieved as a result of the user's input "2015" to the name/phone input field 71 in Figure 2D. When the number of POI entries exceeds the number of POIs displayed on the screen, the user can see the other POI entries by scrolling the list by the scroll bar 81. As noted above with reference to Figure 2D, the city field 73 ("DETROIT") is ignored as the area code of the phone number has the priority in determining the search area. In this display example, the phone number is listed numerically in an ascending order, as a typical numerical order, although other arrangement such as numerically descending order, or an order of distance, are also possible.

The selection button 85 next to the POI with the indication "Go" will allow the user to select the POI. If the indication on the button 85 is a number, it indicates that a plurality of identical POI entries exist. For example, a number "4" is shown on the selection button 85 for the phone number entry "201-521-6789" in Figure 2F. This may occur when the phone number is that of a corporate headquarter and a plurality of branches of the same POI names exist. It may also be the case that the phone number is that of a secretary service and several business entries (POIs) are subscribed to that service. Either way, when the selection button 85 is pressed, the navigation system will show a name and an address of each of the POI entries.

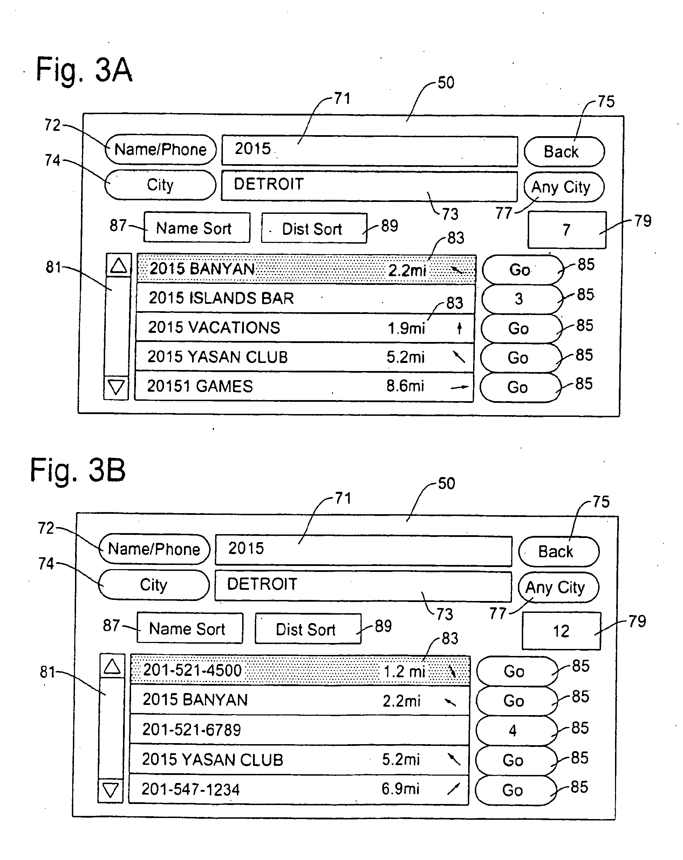

In the above scenario, the navigation system has determined that the user input falls either into the phone number or the POI name but not both. There arises a case where both a POI name and a phone number in the databases satisfy the user's input data. For example, such a case arises when few digits of numerical characters are input and the list button 63 is pressed by the user. Then, the navigation system can list the POI entries matched with the input data in several ways as shown in Figures 3A-3D.

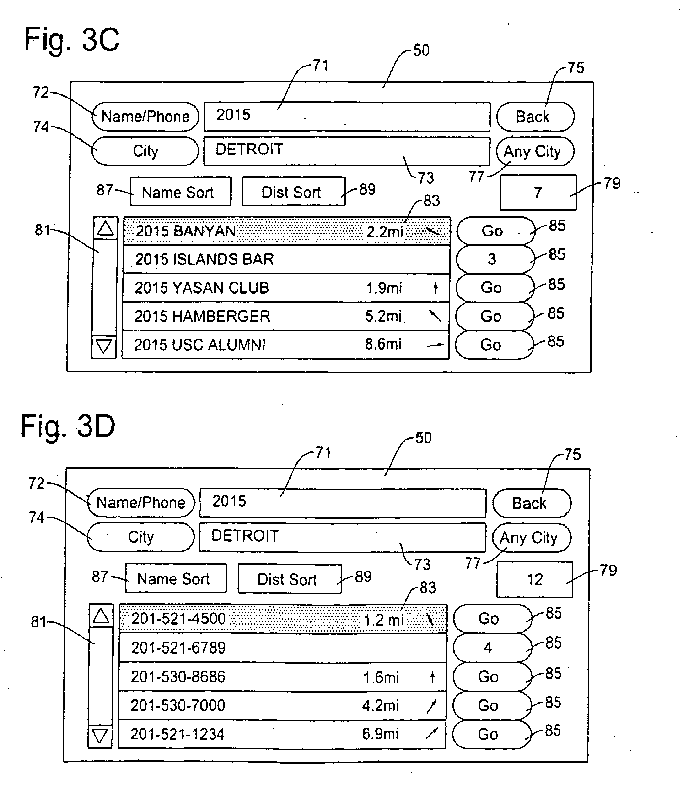

In Figure 3A, the navigation system may list only matching POI name entries while ignoring phone numbers that may be relevant. This will in effect place higher priority to the POI names over the phone number. Alternatively, in Figure 3B, the list may show all matching POI names and phone numbers mixed with one another. In a further example, in Figure 3C, the navigation system may convert the phone number entries into POI names, thereby listing all entries only by the POI names. Conversely, in Figure 3D, it is also feasible to convert the all POI name entries into their phone numbers to list only the POI phone numbers.

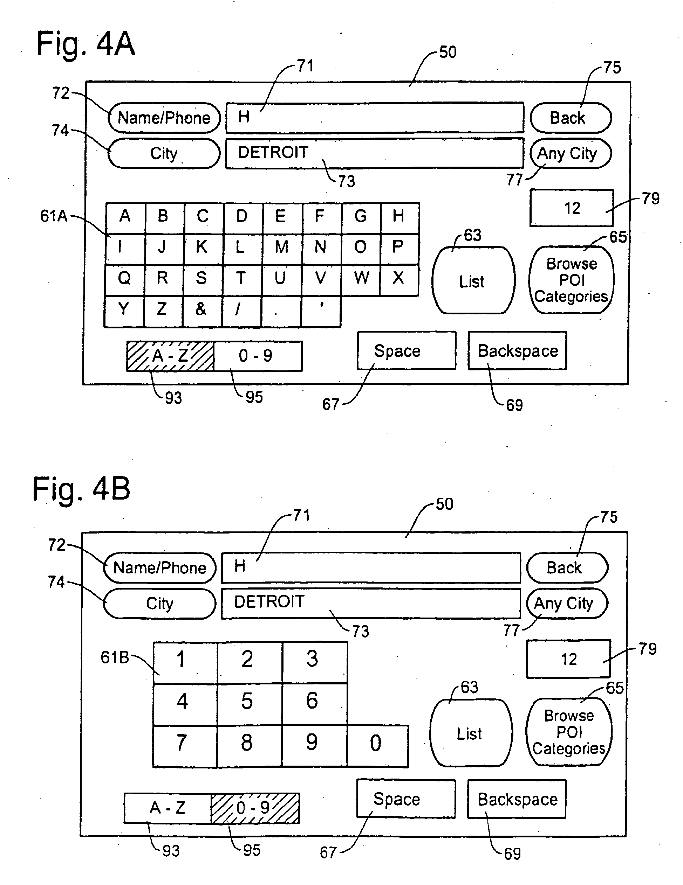

The display examples shown with reference to the above description include the keypad 61 that contains both the alphabetic characters and the numeric characters. The method and apparatus of the present invention may have a keypad that is dedicated solely to alphabetic characters or numeric characters. Figures 4A and 4B show display examples that have a dedicated alphabetic keypad and a dedicated numeric keypad, respectively. Rather than having both the alphabetic characters and the numeric characters on the same keypad, the keypad of Figure 4A and 4B have fewer number of keys so that the user can easily select the characters on the keypad.

In the example of Figures 4A and 4B, the monitor screen 50 includes an alphabetic keypad selection button 93 and a numeric keypad selection button 95 to select one of the keypad. The alphabetic keypad selection button 93 is used to display an alphabetic keypad 61A. In Figure 4A, the alphabetic keypad 61A is selected which has only alphabetic characters and marks. The numeric keypad selection button 95 is used to display a numeric keypad 61B. In Figure 4B, the numeric keypad 61B is selected which has only numeric characters. Although not shown, a keypad selection button for other characters, such as central and eastern European alphabetic characters, may also be provided.

Upon entering alphabetic characters in the name/phone input field 71 on the display shown in Figure 4A through the alphabetic keypad 61A, the navigation system will act in the same manner as described above with reference to Figures 2A-2F to search matching entries. Upon entering numbers in the name/phone input field 71 on the display shown in Figure 4B through the numeric keypad 61B, the navigation system will act in the same manner as described above with reference to Figures 2A-2F to search matching entries. Although touch-screen keypad are used in the above example, other input means, such as a remote controller or a voice recognition system may be used as well.

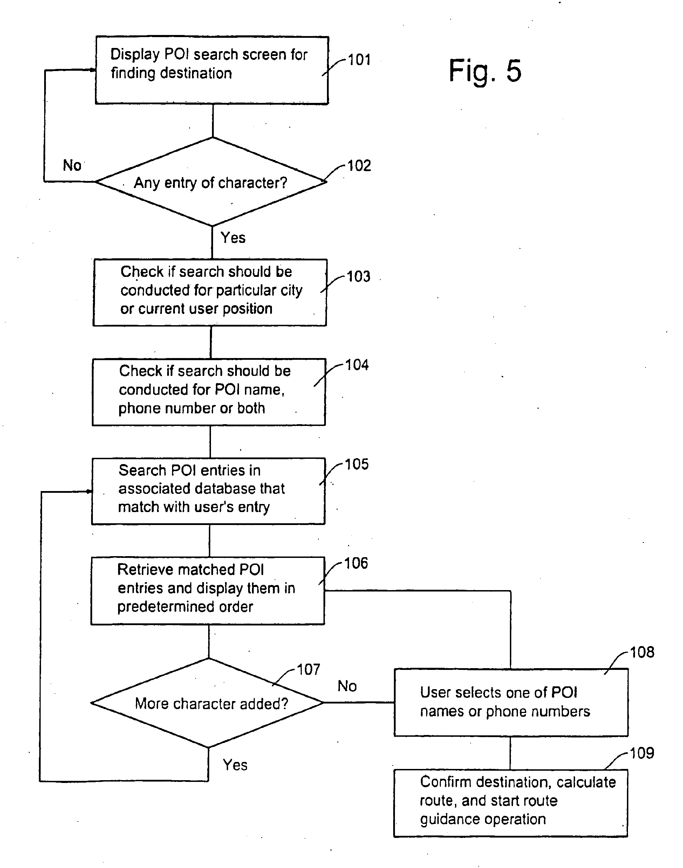

Figure 5 is a flow chart showing a basic operational process for searching a POI in the present invention. In step 101, when the user selects the "Point of Interest" method for finding a destination as in the process of Figure 1C, the navigation system displays a POI search screen. As shown in Figures 2A-2F, the POI search screen in the present invention has the name/phone input field 71. Regardless of whether a POI name or a phone number, the user can input alphabetic characters or numeric characters in the name/phone input field 71.

In step 102, the navigation system determines whether the user has input any character (input data) in the name/phone field 71. If no character is provided in the name/phone field 71, the navigation system waits and keeps on showing the POI search screen in the step 101. If one or more characters are input in the name/phone input field 71, in step 103, the navigation system checks whether the POI search should be conducted for a particular city or a predetermined distance range from a particular position such as a user position. If a particular city name is specified as in the case of Figures 2A and 2B, the navigation system limits the search area to the specified city.

In step 104, by studying the characters that have been input by the user, the navigation system will check whether the search should be conducted for the POI name entries, or the phone number entries, or both the POI name entries and phone number entries. For example, if there is no likelihood that a POI name that starts with the characters input in the name/phone input field 71 exists within the search area, the navigation system determines that the characters being input by the user are for the phone number. Then, the navigation system limits the search to the phone number table 140 in the step 105.

Alternatively, if certain characters input so far by the user cannot be valid for a phone number, the navigation system determines that the characters being input by the user are for the POI name. For example, when the user has input an alphabetic character, the navigation system is able to limit the search to a POI name since a phone number will not have an alphabetic character. Then, the navigation system limits the search to the POI name table 120 of the POI database in the step 105. As long as the input data by the user is valid in both the POI name and the phone number, the navigation system continues to search matching entries in both the POI name table 120 and the phone number table 140 in the step 105.

In step 106, the navigation system retrieves the POI entries that match with the input data in the name/phone input field 71 and displays the retrieved entries in a predetermined order. Typically, the POI entries are listed in the alphabetical order or in the order of distance from the current user position. When both the POI names and phone numbers are found as matching POI entries, the navigation system may list the retrieved POI entries in various manners as shown in Figures 3A-3D.

When the user can find the desired POI in the displayed list, the user selects the POI by its name or phone number in step 108. Alternatively, in step 107, to further narrow down the POI entries, the user may add characters in the name/phone input field 71. Then, the process goes back to the step 105 to search the POI entries that match the characters including the newly added characters and displays the narrowed down POI entries in the step 106.

Such processes may be repeated until the user can comfortably find the desired POI. In the step 108, the user selects one POI entry as a destination. In step 109, upon confirming the destination, the navigation system determines a route to the destination and starts a route guidance operation in a manner shown in Figures 1F-1H.

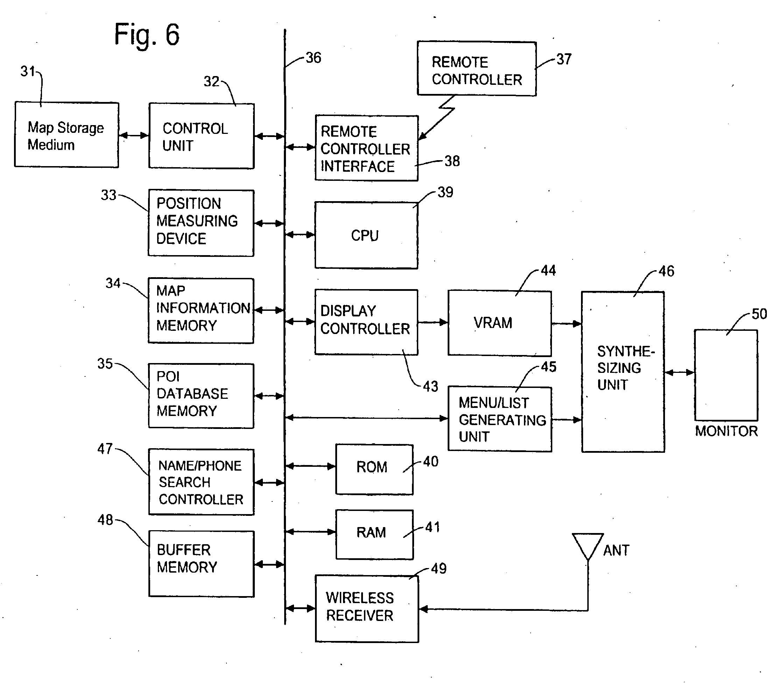

Figure 6 is a schematic block diagram showing the structure of a vehicle navigation system that implements the present invention. Although a vehicle navigation system is shown, the search method and apparatus of the present invention can be implemented in other types of electronic device. For example, the present invention can also be implemented by devices such as a hand-held navigation system, a personal computer, a notebook computer, a personal digital assistant (PDA), a cellular phone, etc. that have a GPS function receiver that enables the device to detect its position and to find relevant points of interest.

In the block diagram of Figure 6, the navigation system includes a map storage medium 31 such as a CD-ROM, DVD, hard disc or other storage means (hereafter "DVD") for storing map information, a DVD control unit 32 for a controlling an operation for reading the map information from the map storage medium 31, a position measuring device 33 for measuring the present vehicle position. The map storage medium 31 has a database for points of interest. The database is structured in such a way that searching by a POI name or a POI phone number is possible.

The position measuring device 33 has a vehicle speed sensor for detecting a moving distance, a gyroscope for detecting a moving direction, a microprocessor for calculating a position, a GPS receiver, and etc. It should be noted that the vehicle speed sensor and a gyroscope can be omitted in a case where the present invention is implemented to a portable navigation device such as in a form of a cellular phone, PDA, laptop computer, etc.

The block diagram of Figure 6 further includes a map information (data) memory 34 for storing the map information which is read out from the map storage medium 31, a database memory 35 for storing database information such as point of interest (POI) information which is read out from the map storage medium 31, a remote controller 37 for executing a menu selection operation, an enlarge/reduce operation, a destination input operation, etc. and a remote controller interface 38 in case remote control capability is to be provided to the navigation system.

The navigation system further includes a bus 36 for interfacing the above units in the system, a processor (CPU) 39 for controlling an overall operation of the navigation system, a ROM 40 for storing various control programs such as a route search program and a map matching program necessary for navigation control, a RAM 41 for storing a processing result such as a guide route, a display controller 43 for generating a map image (a map guide image and an arrow guide image) on the basis of the map information, a VRAM (Video RAM) 44 for storing images generated by the display controller, a menu/list generating unit 45 for generating menu image/various list images, a synthesizing unit 46, a name/phone search controller 47, a buffer memory 48, a wireless receiver 49, and a monitor (display) 50. The ROM 40 has a program that operates to find matching entries in a way that is described above with reference to the flow chart of Figure 5.

The name/phone search controller 47 performs the essential function of the present invention for searching POI entries based on the characters input by the user. The name/phone search controller 47 can be a part of CPU 39 in Figure 6 or a separate controller such as a microprocessor. As soon as any character is input, the name/phone search controller 47 interprets the input character to determine whether the input character by the user is intended as a POI name or a POI phone number or both. The name/phone search controller 47 searches POI entries that match the input characters and retrieves the matching entries from the POI name table and/or the phone number table in the POI database. Further, the name/phone search controller 47 controls the monitor screen 50 to display the retrieved POI entries in the predetermined order.

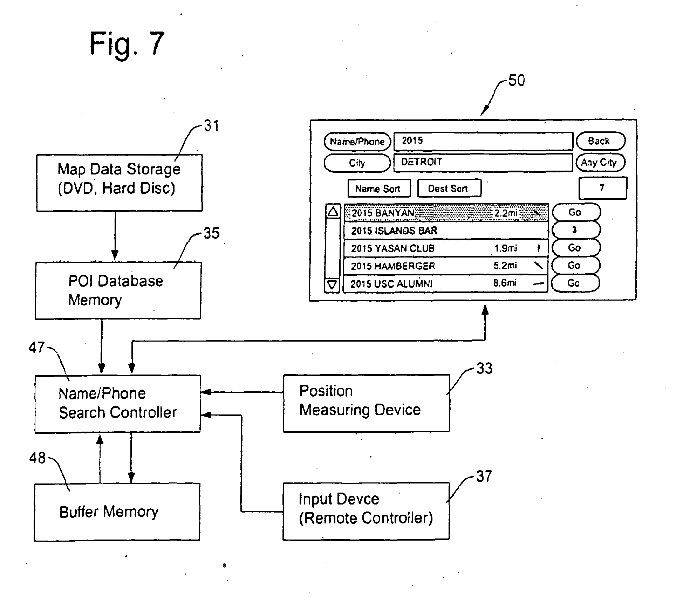

Figure 7 is a functional block diagram showing an example of basic structure of the apparatus of the present invention for searching a POI through POI names or POI phone numbers. The structure of Figure 7 is applicable to any electronic device having a GPS function which enables the electronic device to detect a current position of the user as noted above. The components similar or identical to that in the block diagram of Figure 6 are denoted by the same reference numbers.

The apparatus of the present invention includes a monitor 50 for interfacing with the user, and a name/phone search controller 47 for controlling an overall operation of the apparatus of the present invention. The block diagram of Figure 7 further includes a map data storage 31 such as a DVD or a hard disc for storing map data including POI information (names, phone numbers), a POI database memory 35 for storing the POI database retrieved from the map data storage 31, a position measuring (GPS) device 33 for detecting a current position of the user, an input device such as a keypad or a remote controller 37 for entering alpha-numeric characters, and a buffer memory 48 for temporarily storing various types of data for processing and operation of the apparatus.

In Figure 7, the apparatus of the present invention is able to retrieve the map data and POI information from the map data storage 31 and POI database memory 35. If the electronic device implementing the present invention has a communication capability either through wire or wireless, such POI information (POI names, POI phone numbers) can be retrieved from a remote data server. The name/phone search controller 47 checks whether a particular area for search such as a city name is specified.

The name/phone search controller 47 retrieves the POI information covering the particular area such as a specified city. If any particular area is not specified, the name/phone search controller 47 retrieves the POI information covering a predetermined distance range from the current position. The current position is known by the data from the position measuring device 33.

As soon as any character is input by the user through the input device 37 in the name/phone input field 71, the name/phone search controller 47 interprets the input character (input data) to determine whether the input character by the user is intended as a POI name or a POI phone number or both. The name/phone search controller 47 searches POI entries that match the input characters and retrieves the matching entries from the POI name table or the phone number table in the POI database. Further, the name/phone search controller 47 controls the monitor screen 50 to display the retrieved POI entries in a predetermined order. During the process of searching and displaying the POI entries, the buffer memory 48 may be preferably used to temporarily store the POI names and/or POI phone numbers to promote such a process.

As has been described above, the method and apparatus for searching a POI under the present invention is able to search a desired POI by a name or a phone number of the POI without the need to input the information in separate fields on the monitor screen. The method and apparatus of the present invention automatically determines whether the input data is valid for a POI name or a POI phone number or both, and immediately searches the matching entries. As a result, the method and apparatus in the present invention can eliminate the steps necessary to choose between the phone number search and the POI name search, thereby saving the time and trouble in operating the navigation system or other electronic devices.

Although the invention is described herein with reference to the preferred embodiments, one skilled in the art will readily appreciate that various modifications and variations may be made without departing from the scope of the appended claims.

## Claims

1. An apparatus for searching a point of interest (POI), comprising:
means (50) adapted for dismaying a screen for searching a POI, the screen including an input field (71) arranged for accepting a user's input of characters both by a name of POI and by a phone number of POI;
means (47) adapted for comparing the characters provided to the input field (71) by the user with information in a POI database having a POI name table (120) and a POI phone number table (140);
means (47) adapted for retrieving POI names or POI phone numbers from the corresponding tables (120, 140) that match the characters specified by the user in the input field (71); and
means (50) adapted for displaying a list of the retrieved POI names or POI phone numbers in a predetermined order.

2. An apparatus for searching a point of interest as defined in Claim 1, further comprising means (47) adapted for repeating the steps of comparing the characters with the information in the POI database, retrieving POI names or POI phone numbers, and displaying a list of the retrieved POI names or POI phone numbers, every time when an additional character is provided to the input field (71).

3. An apparatus for searching a point of interest as defined in any of the preceding Claims, further comprising means (47) adapted for interpreting the characters in the input field (71) and determining whether the input characters by the user are intended as a POI name or a POI phone number and discontinuing the search for either the POI name or the POI phone number that is determined not intended by the user.

4. An apparatus for searching a point of interest as defined in any of the preceding Claims, wherein said means (50) adapted for displaying the screen for searching a POI includes means adapted for specifying a city name as a search area or deleting the city name from the search area.

5. An apparatus for searching a point of interest as defined in any of the preceding Claims, wherein said means (50) adapted for displaying the screen for searching a POI includes means adapted for browsing categories of POIs in the POI database (35) and selecting a category of POI to search a POI within the selected category.

6. An apparatus for searching a point of interest as defined in any of the preceding Claims, wherein said means (50) adapted for displaying the screen for searching a POI includes means adapted for selecting an alpha-numeric keypad (61), a dedicated alphabetic keypad (61A), or a dedicated numeric keypad (61B) for entering the characters in the input field (71).

7. An apparatus for searching a point of interest as defined in any of the preceding Claims, wherein said means (83) adapted for displaying the list of retrieved POI names or POI phone numbers includes means (79) adapted for displaying a numerical character adjacent to a particular POI name or POI phone number showing a number of entries which are identical to the particular POI name of POI phone number.

8. An apparatus for searching a point of interest as defined in any of the preceding Claims, wherein said means (83) adapted for displaying the list of retrieved POI names or POI phone numbers includes means adapted for displaying both the retrieved POI name and the retrieved POI phone number in the same list when both a POI name and a POI phone number matching the input characters are found.

9. An apparatus for searching a point of interest as defined in any of the preceding Claims, wherein said means (83) adapted for displaying the list of retrieved POI names or POI phone numbers includes means adapted for converting the retrieved POI name to a POI phone number so that only the POI phone numbers are displayed on the screen when both a POI name and a POI phone number matching the input characters are found.

10. An apparatus for searching a point of interest as defined in any of Claims 1-8, wherein said means (83) adapted for displaying the list of retrieved POI names or POt phone numbers includes means adapted for converting the retrieved POI phone number to a POI name so that only the POI names are displayed on the screen when both a POI name and a POI phone number matching the input characters are found.

11. A method for searching a point of interest (POI), comprising the steps of:
displaying a screen (50) for searching a POI, the screen including an input field (71) arranged for accepting a user's input of characters both by a name of POI and by a phone number of POI;
comparing the characters provided to the input field (71) by the user with information in a POI database (35) having a POI name table (120) and a POI phone number table (140);
retrieving POI names or POI phone numbers from the corresponding tables (120, 140) that match the characters specified by the user in the input field (71); and
displaying a list of the retrieved POI names or POI phone numbers in a predetermined order.

## Patentansprüche

1. Vorrichtung zum Suchen eines Ortes von Interesse (POI) aufweisend:
Mittel (50) eingerichtet, um eine Bildschirmdarstellung zum Suchen eines POI anzuzeigen, wobei die Bildschirmdarstellung ein Eingabefeld (71) aufweist, das eingerichtet ist, die Eingabe von Zeichen durch einen Benutzer sowohl durch eines Namens des POI als auch durch eine Telefonnummer des POI zu akzeptieren;
Mittel (47) eingerichtet, um im Eingabefeld (71) durch den Benutzer zur Verfügung gestellte Zeichen mit Information in einer POI-Datenbank, die eine POI-Namentabelle (120) und eine POI-Telefonnummertabelle (140) enthält, zu vergleichen;
Mittel (47) eingerichtet, um POI-Namen oder POI-Telefonnummern aus den zugehörigen Tabellen (120, 140), die zu den von dem Benutzer im Eingabefeld (71) angegebenen Zeichen passen, zu erhalten; und
Mittel (50) eingerichtet, um eine Liste der erhaltenen POI-Namen oder POI-Telefonnummern in einer vorgegebenen Reihenfolge anzuzeigen.

2. Vorrichtung zum Suchen eines Ortes von Interesse nach Anspruch 1, die zusätzlich ein Mittel (47) aufweist, das eingerichtet ist, um die Schritte des Vergleichens der Zeichen mit der Information in der POI Datenbank, des Erhaltens von POI-Namen oder POI-Telefonnummern und des Anzeigens einer Liste der erhaltenen POI-Namen oder POI-Telefonnummern jedes Mal zu wiederholen, wenn ein zusätzliches Zeichen in das Eingabefeld (71) eingegeben wird.

3. Vorrichtung zum Suchen eines Ortes von Interesse nach einem der vorangehenden Ansprüche, die zusätzlich ein Mittel (47) aufweist, das eingerichtet ist, um die Zeichen in dem Eingabefeld (71) zu interpretieren und zu bestimmen, ob die von dem Benutzer eingegebenen Zeichen als ein POI-Name oder als eine POI-Telefonnummer gemeint sind, und die Suche entweder nach POI-Namen oder nach POI-Telefonnummern zu unterbrechen, von denen festgestellt wird, dass sie von dem Benutzer nicht gemeint sind.

4. Vorrichtung zum Suchen eines Ortes von Interesse nach einem der vorangehenden Ansprüche, wobei das Mittel (50), das eingerichtet ist, die Bildschirmdarstellung zum Suchen eines POIs anzuzeigen, ein Mittel aufweist, das eingerichtet ist, um einen Ortsnamen als Suchgebiet zu festzulegen oder den Ortsnamen aus dem Suchgebiet zu streichen.

5. Vorrichtung zum Suchen eines Ortes von Interesse nach einem der vorangehenden Ansprüche, wobei das Mittel (50), das eingerichtet ist, um die Bildschirmdarstellung zum Suchen eines POIs anzuzeigen, ein Mittel aufweist, das eingerichtet ist, um Kategorien von POIs in der POI-Datenbank (35) zu durchsuchen und eine POI-Kategorie auszuwählen, um einen POI in der ausgewählten Kategorie zu suchen.

6. Vorrichtung zum Suchen eines Ortes von Interesse nach einem der vorangehenden Ansprüche, wobei das Mittel (50), das eingerichtet ist, um die Bildschirmdarstellung zum Suchen eines POI anzuzeigen, ein Mittel aufweist, das eingerichtet ist, um zum Eingeben der Zeichen in das Eingabefeld (71) eine alphanumerische Tastatur (61), eine dedizierte alphabetische Tastatur (61A) oder eine dedizierte numerische Tastatur (61 B) auszuwählen.

7. Vorrichtung zum Suchen eines Ortes von Interesse nach einem der vorangehenden Ansprüche, wobei das Mittel (63), das eingerichtet ist, die Liste der erhaltenen POI-Namen oder POI-Telefonnummern anzuzeigen, ein Mittel (79) aufweist, das eingerichtet ist, um neben einem bestimmten POI-Namen oder einer bestimmten POI-Telefonnummer ein numerisches Zeichen anzuzeigen, das die Anzahl von Einträgen anzeigt, die mit dem bestimmten POI-Namen oder mit der bestimmten POI-Telefonnummer identisch sind.

8. Vorrichtung zum Suchen eines Ortes von Interesse nach einem der vorangehenden Ansprüche, wobei das Mittel (83), das eingerichtet ist, die Liste der erhaltenen POI-Namen oder POI-Telefonnummern anzuzeigen, ein Mittel aufweist, das eingerichtet ist, um sowohl den erhaltenen POI-Namen als auch die erhaltene POI-Telefonnummer in der gleichen Liste anzuzeigen, wenn sowohl ein POI-Name als auch eine POI-Telefonnummer gefunden werden, die mit den eingegebenen Zeichen übereinstimmen.

9. Vorrichtung zum Suchen eines Ortes von Interesse nach einem der vorangehenden Ansprüche, wobei das Mittel (83), das eingerichtet ist, um die Liste der erhaltenen POI-Namen oder POI-Telefonnummern anzuzeigen, ein Mittel aufweist, das eingerichtet ist, um den erhaltenen POI-Namen in eine POI-Telefonnummer umzuwandeln, so dass, wenn sowohl ein POI-Namen als auch eine POI-Telefonnummer gefunden werden, die mit den eingegebenen Zeichen übereinstimmen, in der Bildschirmdarstellung nur POI-Telefonnummern angezeigt werden.

10. Vorrichtung zum Suchen eines Ortes von Interesse nach einem der Ansprüche 1 bis 8, wobei das Mittel (83), das eingerichtet ist, die Liste der erhaltenen POI-Namen oder POI-Telefonnummern anzuzeigen, ein Mittel aufweist, das eingerichtet ist, die erhaltene POI-Telefonnummer in einen POI-Namen umzuwandeln, so dass, wenn sowohl ein POI-Name als auch eine POI-Telefonnummer gefunden werden, die mit den eingegebenen Zeichen übereinstimmen, in der Bildschirmdarstellung nur POI-Namen angezeigt werden.

11. Verfahren zum Suchen eines Ortes von Interesse (POI) mit den Schritten:
Anzeigen einer Bildschirmdarstellung (50) zum Suchen eines POI, wobei die Bildschirmdarstellung ein Eingabefeld (71) aufweist, das eingerichtet ist, die Eingabe von Zeichen durch einen Benutzer sowohl durch einen Namen eines POI als auch durch eine Telefonnummer eines POI zu akzeptieren;
Vergleichen der von dem Benutzer im Eingabefeld (71) bereit gestellten Zeichen mit Information in einer POI-Datenbank (35), die eine POI-Namentabelle (120) und eine POI-Telefonnummertabelle (140) enthält;
Erhalten von POI-Namen oder POI-Telefonnummern aus den zugehörigen Tabellen (120, 140), die mit den Zeichen übereinstimmen, die durch den Benutzer in das Eingabefeld (71) eingegeben worden sind; und Anzeigen einer Liste der erhaltenen POI-Namen oder POI-Telefonnummern in einer vorgegebenen Reihenfolge.

## Revendications

1. Dispositif de recherche d'un point d'intérêt (POI), comprenant :
un moyen (50) adapté pour afficher un écran pour rechercher un POI, l'écran comprenant un champ de saisie (71) adapté pour accepter une saisie de caractères effectuée par l'utilisateur, à la fois par un nom de POI et par un numéro de téléphone de POI ;
un moyen (47) adapté pour comparer les caractères introduits dans le champ de saisie (71) par l'utilisateur avec des informations présentes dans une base de données de POI comportant un tableau de noms de POI (120) et un tableau de numéros de téléphone de POI (140) ;
un moyen (47) adapté pour récupérer des noms de POI ou des numéros de téléphone de POI dans les tableaux correspondants (120, 140) qui correspondent aux caractères spécifiés par l'utilisateur dans le champ de saisie (71) ; et
un moyen (50) adapté pour afficher une liste des noms de POI ou des numéros de téléphone de POI récupérés dans un ordre prédéterminé.

2. Dispositif de recherche d'un point d'intérêt selon la revendication 1, comprenant en outre un moyen (47) adapté pour répéter les étapes de comparaison des caractères avec les informations présentes dans la base de données de POI, de récupération de noms de POI ou de numéros de téléphone de POI, et d'affichage d'une liste des noms de POI ou des numéros de téléphone de POI récupérés, à chaque fois qu'un caractère supplémentaire est introduit dans le champ de saisie (71).

3. Dispositif de recherche d'un point d'intérêt selon l'une quelconque des revendications précédentes, comprenant en outre un moyen (47) adapté pour interpréter les caractères dans le champ de saisie (71) et pour déterminer si les caractères saisis par l'utilisateur concernent un nom de POI ou un numéro de téléphone de POI et arrêter la recherche du nom de POI ou du numéro de téléphone de POI qui est déterminé comme n'étant pas voulu par l'utilisateur.

4. Dispositif de recherche d'un point d'intérêt selon l'une quelconque des revendications précédentes, dans lequel ledit moyen (50) adapté pour afficher l'écran de recherche d'un POI comprend un moyen adapté pour spécifier un nom de ville comme zone de recherche ou effacer le nom de ville de la zone de recherche.

5. Dispositif de recherche d'un point d'intérêt selon l'une quelconque des revendications précédentes, dans lequel ledit moyen (50) adapté pour afficher l'écran de recherche d'un POI comprend un moyen adapté pour parcourir des catégories de POI dans la base de données de POI (35) et sélectionner une catégorie de POI pour chercher un POI dans la catégorie sélectionnée.

6. Dispositif de recherche d'un point d'intérêt selon l'une quelconque des revendications précédentes, dans lequel ledit moyen (50) adapté pour afficher l'écran de recherche d'un POI comprend un moyen adapté pour sélectionner un clavier alphanumérique (61), un clavier alphabétique dédié (61A) ou un clavier numérique dédié (61B) pour entrer les caractères dans le champ de saisie (71).

7. Dispositif de recherche d'un point d'intérêt selon l'une quelconque des revendications précédentes, dans lequel ledit moyen (83) adapté pour afficher la liste de noms de POI ou de numéros de téléphone de POI récupérés comprend un moyen (79) adapté pour afficher un caractère numérique adjacent à un nom de POI ou à un numéro de téléphone de POI particulier montrant un nombre d'entrées qui sont identiques au nom de POI ou numéro de téléphone de POI particulier.

8. Dispositif de recherche d'un point d'intérêt selon l'une quelconque des revendications précédentes, dans lequel ledit moyen (83) adapté pour afficher la liste de noms de POI ou de numéros de téléphone de POI récupérés comprend un moyen adapté pour afficher à la fois le nom de POI récupéré et le numéro de téléphone de POI récupéré dans la même liste quand à la fois un nom de POI et un numéro de téléphone de POI correspondant aux caractères saisis sont trouvés.

9. Dispositif de recherche d'un point d'intérêt selon l'une quelconque des revendications précédentes, dans lequel ledit moyen (83) adapté pour afficher la liste de noms de POI ou de numéros de téléphone de POI récupérés comprend un moyen adapté pour convertir le nom de POI récupéré en un numéro de téléphone de POI, de sorte que seuls les numéros de téléphone de POI sont affichés sur l'écran quand à la fois un nom de POI et un numéro de téléphone de POI correspondant aux caractères saisis sont trouvés.

10. Dispositif de recherche d'un point d'intérêt selon l'une quelconque des revendications 1 à 8, dans lequel ledit moyen (83) adapté pour afficher la liste de noms de POI ou de numéros de téléphone de POI récupérés comprend un moyen adapté pour convertir le numéro de téléphone de POI récupéré en un nom de POI, de sorte que seuls les noms de POI sont affichés sur l'écran quand à la fois un nom de POI et un numéro de téléphone de POI correspondant aux caractères saisis sont trouvés.

11. Procédé de recherche d'un point d'intérêt (POI) comprenant les étapes suivantes :
afficher un écran (50) de recherche de POI, l'écran comprenant un champ de saisie (71) adapté pour accepter une saisie de caractères effectuée par un utilisateur, à la fois par un nom de POI et par un numéro de téléphone de POI ;
comparer les caractères introduits dans le champ de saisie (71) par l'utilisateur avec des informations présentes dans une base de données de POI (35) comportant un tableau de noms de POI (120) et un tableau de numéros de téléphone de POI (140) ;
récupérer des noms de POI ou des numéros de téléphone de POI dans les tableaux correspondants (120, 140) qui correspondent aux caractères spécifiés par l'utilisateur dans le champ de saisie (71) ; et
afficher une liste des noms de POI ou des numéros de téléphone de POI récupérés dans un ordre prédéterminé.
